# EUROPÄISCHE PATENTSCHRIFT

(11) **EP 0 603 647 B1**
(45) Veröffentlichungstag und Bekanntmachung des Hinweises auf die Patenterteilung: **10.09.1997**
(21) Anmeldenummer: 93119763.6
(22) Anmeldetag: 08.12.1993
(51) Int. Cl.: B29C 44/20, B05C 5/02

(54) **Vorrichtung zum kontinuierlichen Herstellen von Schaumstoffbahnen, insbesondere Hartschaumstoffplatten**
Apparatus for the continuous production of foam sheets, particularly hard foam panels
Dispositif pour la fabrication en continu de bandes en mousse plastique, notamment de plaques de mousse à haute résistance

(30) Priorität: 21.12.1992 DE 4243277
(43) Veröffentlichungstag der Anmeldung: 29.06.1994
(73) Patentinhaber: BAYER AG, 51368 Leverkusen (DE)
(72) Erfinder: Kellerhof, Ingo, Dipl.-Ing., D-53819 Seelscheid (DE); Pfeil, Hans-Dieter, D-42115 Wuppertal (DE); Krippl, Kurt, D-40789 Monheim (DE)

(56) Entgegenhaltungen:
- EP-A- 0 165 896
- EP-A- 0 173 772
- EP-A- 0 553 695
- DE-A- 2 038 253
- FR-A- 2 511 889
- GB-A- 1 117 655

## Beschreibung

Die Erfindung betrifft eine Vorrichtung zum kontinuierlichen Herstellen von Schaumstoffbahnen, insbesondere Hartschaumstoffplatten, bestehend aus einem endlosen Transportband und einem eingangsseitig darüber angeordneten Portal mit einer quer hin- und hergehenden Auftragsvorrichtung für ein schaumstoffbildendes Reaktionsgemisch, wobei diese Auftragsvorrichtung aus einem Mischkopf und einem an dessen Auslaufkanal anschließenden, in Förderrichtung des Transportbandes weisenden, an seiner Unterseite mit Auslauföffnungen versehenen Gießrohr besteht (DE-A 27 26 360).

Solche Gießrohre werden vorzugsweise für den Gemischauftrag bei sogenannten Doppeltransportbandanlagen eingesetzt, sie können aber auch bei Blockschäumanlagen verwendet werden. Diese Gießrohre, in der Fachsprache "Gießharke" genannt, verstopfen während des Betriebes immer wieder, sei es durch langsames Zuwachsen während der Produktion oder durch Aushärten von Reaktionsgemisch in Produktionspausen. Die Reinigung bei Produktionsunterbrechungen durch Druckluft oder Lösungsmittel ist physiologisch bedenklich, weil die Umwelt belastet wird. Die damit bedingten Produktionsverzögerungen erhöhen unnötigerweise die Fertigungskosten.

Es besteht die Aufgabe, eine Vorrichtung der eingangs genannten Art zu schafffen, bei welcher Produktionsunterbrechungen durch verschmutzte oder verstopfte Gießrohre vermieden werden.

Diese Aufgabe wird dadurch gelöst, daß mehrere Gießrohre auf einer an der Auftragsvorrichtung abnehmbar angeordneten Magazinplatte vorgesehen sind, wobei der Auslaufkanal gegen diese Magazinplatte weist und die Magazinplatte für jedes Gießrohr mit einem Durchlaß versehen und derart verstellbar ist, daß die Gießrohre nacheinander über die ihnen zugeordneten Durchlässe mit dem Auslaufkanal verbindbar sind.

Dadurch wird erreicht, daß das Bedienungspersonal, sobald es eine Verschmutzung des Gießrohres bemerkt, durch Verstellen der Magazinplatte sofort das nächste Gießrohr einsetzen kann. Auf der Magazinplatte sind vorzugsweise so viele Gießrohre angeordnet, wie der Wahrscheinlichkeit nach für eine mehrstündige Produktion benötigt werden. In einer größeren Produktionspause kann dann die gesamte Magazinplatte gegen eine andere ausgetauscht werden, und die Gießrohre der benutzten Magazinplatte lassen sich für den nächsten Einsatz reinigen.

Eine solche Vorrichtung ist in der nicht vorveröffentlichten EP-A-0 553 695 beschrieben, die für die Vertragsstaaten Deutschland, Frankreich und Italien als Stand der Technik gemäß Artikel 54(3) EPÜ gilt. Für diese Vertragsstaaten - und im übrigen bevorzugt - weist die Erfindung das zusätzliche Merkmal auf, daß den Durchlässen Druckentlastungskanäle zugeordnet sind, welche vom benachbarten Durchlaß bzw. von dessen Druckentlastungskanal nur durch einen schmalen Abdichtsteg getrennt sind

Auf diese Weise wird erreicht, daß beim Umschalten auf das nächste Gießrohr der Gemischstrom kaum unterbrochen wird und auch kein in die Mischkammer zurückschlagender Druckaufbau stattfindet.

Die Magazinplatte ist entweder als drehbare Scheibe ausgebildet, auf der die Gießrohre in Form eines Kranzes angeordnet sind, oder alternativ dazu ist die Magazinplatte als Flachschieber ausgebildet, auf dem die Gießrohre nebeneinander angeordnet sind.

Es versteht sich, daß die Abstände gleichmäßig sein müssen und daß vorzugsweise eine Raste vorhanden ist, damit jedes Gießrohr bei seinem Gebrauch in exakte Deckung mit dem Auslaufkanal der Mischkammer gebracht werden kann.

Vorzugsweise sind die Stirnseiten der Gießrohre mit einer entfernbaren Kappe versehen.

Diese Kappe muß einerseits leicht lösbar sein, aber andererseits so fest sitzen, daß sie sich während des Betriebes nicht von selbst löst. Wenn sie einen in das Gießrohr greifenden Ansatz besitzt, ist dies von Vorteil, weil man dann nach dem Abnehmen der Kappe einen passenden Bolzen in den von dem Ansatz von Material freigehaltenen Raum des Gießrohres zum Reinigen einführen und das ausgehärtete Material herausklopfen kann.

Vorzugsweise ist die Magazinplatte mit einem Stellantrieb versehen.

Dies hat den Vorteil, daß die Umstellung auf das nächste Gießrohr ohne Unterbrechung der Produktion erfolgen kann, wenn dieser Stellmotor von einem feststehenden Anlagenteil, beispielsweise dem Schaltpult, betätigbar ist.

In der Zeichnung ist die neue Vorrichtung in zwei Ausführungsbeispielen rein schematisch dargestellt und nachstehend näher erläutert. Es zeigen:
- Fig. 1: die Vorrichtung in der Seitenansicht,
- Fig. 2: die Vorrichtung in der Draufsicht,
- Fig. 3: die Einzelheit A in vergrößertem Maßstab im Schnitt,
- Fig. 4: die Einzelheit A in der Stirnansicht,
- Fig. 5: die Magazinplatte in der Rückansicht,
- Fig. 6: einen Schnitt gemäß Linie B-C in Fig. 5,
- Fig. 7: eine zweite Ausführungsform der Einzelheit A,
- Fig. 8: die Ausführungsform gemäß Fig. 7 in der Stirnansicht und
- Fig. 9: die Magazinplatte in der Rückansicht.

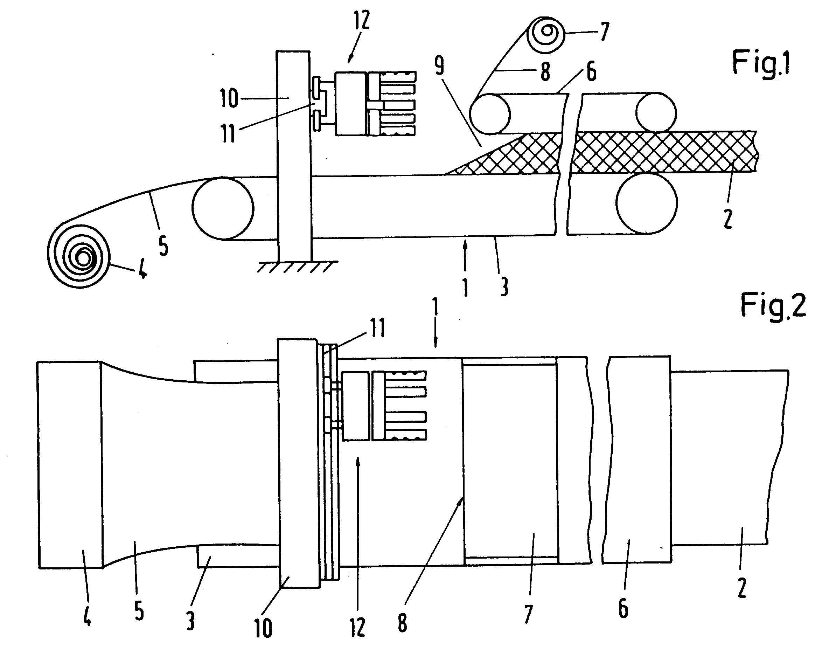

In Fig. 1, 2 besteht die Vorrichtung aus einem sogenannten Doppeltransportband 1 zum Herstellen von mit Deckschichten kaschierten Hartschaumstoffplatten 2. Es besteht aus einem Unterband 3, auf welchem eine von einer Rolle 4 abgezogene Papierbahn 5 transportiert wird, und einem Oberhand 6, unter welchem ebenfalls eine von einer Rolle 7 abgezogene Papierbahn 8 in einen zwischen Unterband 3 und Oberhand 6 gebildeten Schäumraum 9 einlauft. Eingangsseitig ist über dem Unterband 3 ein Portal mit einer Querschiene 11 angeordnet, an welcher eine Auftragsvorrichtung 12 über die vorgesehene Schäumbreite hin- und hergeführt wird. Der Antrieb der Auftragsvorrichtung 12 ist der besseren Übersichtlichkeit halber nicht dargestellt.

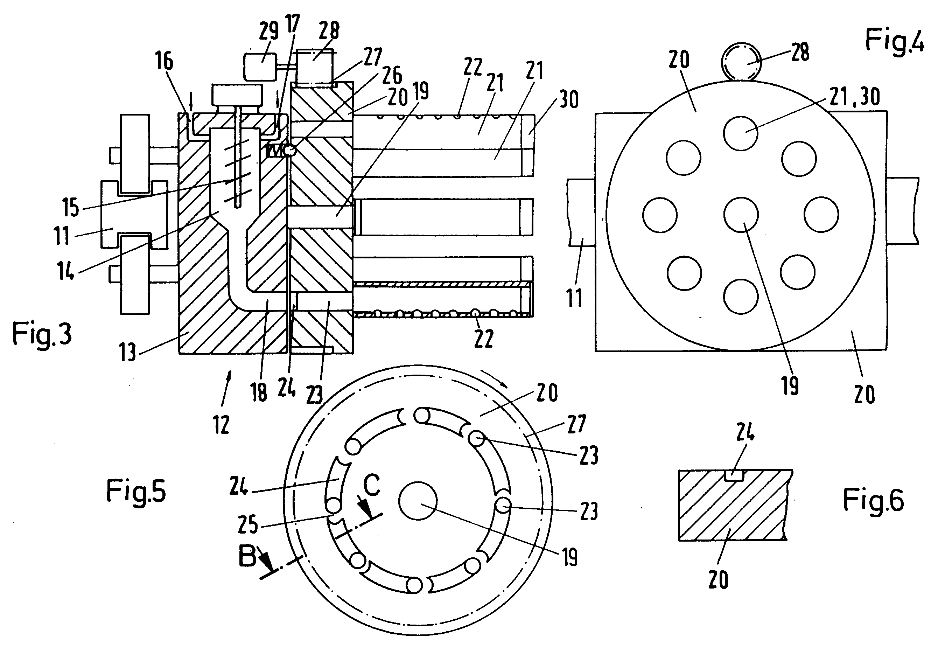

Die in den Fig. 3 bis 6 detailliert dargestellte Auftragsvorrichtung 12 besteht aus einem an der Querschiene 11 laufenden Wagen 13. Darin ist eine Mischkammer 14 mit Rührwerk 15 angeordnet. Zuleitungen 16 und 17 für die Reaktionskomponenten sind angedeutet. Von der Mischkammer 14 führt ein Auslaßkanal 18 ab und mündet gegen eine um eine am Wagen 13 befestigte Achse 19 drehbare, austauschbare und als Scheibe ausgebildete Magazinplatte 20. Diese ist mit acht angeschweißten, kranzartig angeordneten Gießrohren 21 bestückt, welche, bezogen auf die Magazinplatte 20, radial nach außen gerichtete Auslauföffnungen 22 aufweisen. In der Magazinplatte 20 ist für jedes Gießrohr 21 ein Durchlaß 23 vorgesehen. Rückseitig weist die Magazinplatte 20 eingefräste Druckentlastungskanäle 24 auf, welche zum nächsten Durchlaß 23 weisen und von diesem nur durch einen schmalen Dichtungssteg 25 getrennt sind Eine federbelastete Kugel dient als Raste 26 und sorgt dafür, daß jeder Durchlaß 23 mit dem Auslaufkanal 18 exakt zur Deckung gebracht werden kann. Stirnseitig weist die Magazinplatte 20 einen Zahnkranz 27 auf, in welchen ein Ritzel 28 mit Antrieb 29 eingreift. Die Stirnseiten der Gießrohre 21 sind mit einer entfernbaren Kappe 30 verschlossen.

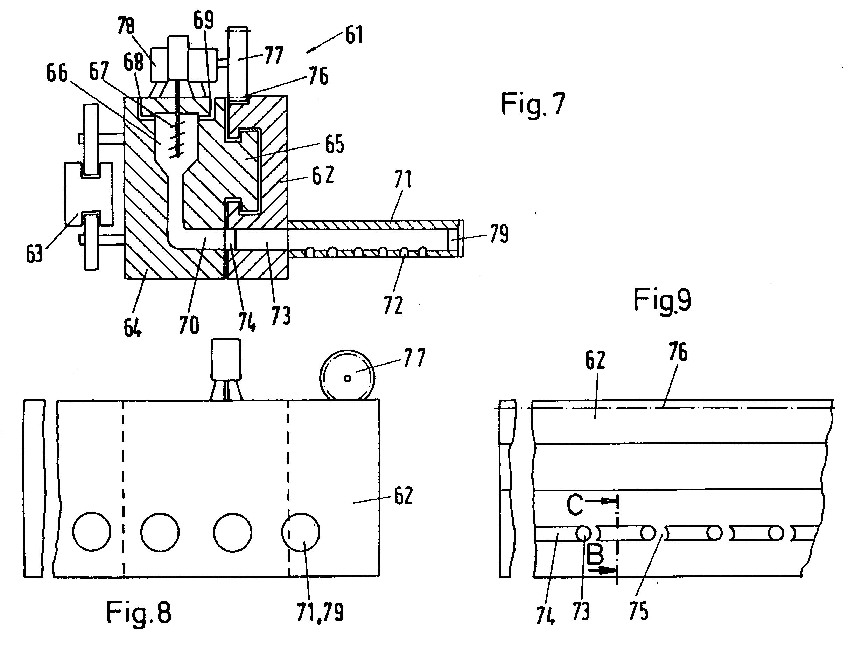

Die Ausführungsform gemäß Fig. 7 bis 9 weicht von jener gemäß Fig. 1 bis 6 nur dadurch ab, daß die Auftragsvorrichtung 61 anstelle einer als Scheibe ausgebildeten Magazinplatte eine als Flachschieber ausgebildete Magazinplatte 62 besitzt. Die Auftragsvorrichtung 61 besteht aus einem auf einer Querschiene 63 des Portals geführten Wagen 64. Besagte Magazinplatte 62 ist ihrerseits in einer Führungsschiene 65 am Wagen 64 verschiebbar geführt. Im Wagen 64 ist eine Mischkammer 66 mit Rührwerk 67 angeordnet. Zuleitungen 68 und 69 für die Reaktionskomponenten sind angedeutet. Von der Mischkammer 66 führt ein Auslaufkanal 70 ab und mündet gegen die auf der Führungsschiene 65 abdichtend geführte Magazinplatte 62. Diese ist mit mehreren, in gleichen Abständen in Reihe angeordneten Gießrohren 71 bestückt, welche mit nach unten weisenden Auslauföffnungen 72 versehen sind. In der Magazinplatte 62 ist jedem Gießrohr 71 ein Durchlaß 73 zugeordnet. Auf der Rückseite dieser Magazinplatte 62 ist jedem Durchlaß 73 ein eingefräster Druckentlastungskanal 74 zugeordnet, welcher vom benachbarten Durchlaß 73 bzw. von dessen Druckentlastungskanal 74 nur durch einen schmalen Dichtungssteg 75 getrennt ist. Eine nicht dargestellte Raste sorgt dafür, daS die einzelnen Durchlässe 73 jeweils exakt mit dem Auslaufkanal 70 zur Deckung gebracht werden können.

Am oberen Rand weist die Magazinplatte 62 eine Zahnleiste 76 auf, in welche ein Ritzel 77 des Antriebes 78 eingreift. Die Stirnseiten der Gießrohre 69 sind mit einer entfernbaren Kappe 79 verschlossen.

### Arbeitsbeispiel

Man beginnt die Produktion auf der genannten Vorrichtung mit einer Magazinplatte, deren Gießrohre alle gesäubert sind. Bemerkt das Bedienungspersonal während der Produktion das Ausfallen eines austretenden Strahles, so ist das ein Zeichen dafür, daß die zugehörige Auslaßöffnung verstopft ist. Es schaltet durch Betätigen des Antriebs der Magazinplatte auf das nächste Gießrohr um, so daß die Produktion nicht unterbrochen wird. Auch bei kurzen Produktionsunterbrechungen, beispielsweise während Pausen, in denen das Reaktionsgemisch im Gießrohr aushärtet, stellt das Bedienungspersonal ebenfalls auf das nächste Gießrohr um, usw. In einer großen Produktionspause tauscht man die Magazinplatte aus, löst die Kappen der benutzten Gießrohre, steckt jeweils einen passenden Bolzen in das Gießrohr und treibt mit Hammerschlägen das im Gießrohr und im Druckentlastungskanal ausgehärtete Material aus, wobei die in den Auslaßsöffnungen verbleibenden Reste abplatzen. In gleicher Weise reinigt man mit einem Bolzen kleineren Durchmessers diese Auslaßöffnungen. Oft reicht es auch aus, die Magazinplatte für einige Zeit in ein Lösungsmittelbad zu legen, um sie zu reinigen.

## Patentansprüche (Patentansprüche für folgende(n) Vertragsstaat(en): DE, FR, IT)

1. Vorrichtung zum kontinuierlichen Herstellen von Schaumstoffbahnen, insbesondere Hartschaumstoffplatten, bestehend aus einem endlosen Transportband (1) und einem eingangsseitig darüber angeordneten Portal (10) mit einer quer hin- und hergehenden Auftragsvorrichtung (12, 61) für ein schaumstoffbildendes Reaktionsgemisch, wobei diese Auftragsvorrichtung (12, 61) aus einem Mischkopf (14, 66) und einem an dessen Auslaufkanal (18, 70) anschließenden, in Förderrichtung des Transportbandes (1) weisenden, an seiner Unterseite mit Auslauföffnungen (22, 72) versehenen Gießrohr (21, 71) besteht, wobei mehrere Gießrohre (21, 71) auf einer an der Auftragsvorrichtung (12, 61) abnehmbar angeordneten Magazinplatte (20, 62) vorgesehen sind; der Auslaufkanal (18, 70) gegen diese Magazinplatte (20, 62) weist und die Magazinplatte (20, 62) für jedes Gießrohr (21, 71) mit einem Durchlaß (23, 73) versehen und derart verstellbar ist, daß die Gießrohre (21, 71) nacheinander über die ihnen zugeordneten Durchlässe (23, 73) mit dem Auslaufkanal (70) verbindbar sind, wobei den Durchlässen (23, 73) Druckentlastungskanäle (24, 74) zugeordnet sind, welche vom benachbarten Durchlaß (23, 73) bzw. von dessen Druckentlastungskanal (24, 74) nur durch einen schmalen Abdichtungssteg (25, 75) getrennt sind.

2. Vorrichtung nach Anspruch 1, dadurch gekennzeichnet, daß die Magazinplatte (20) als drehbare Scheibe ausgebildet ist, auf der die Gießrohre (21) in Form eines Kranzes angeordnet sind.

3. Vorrichtung nach Anspruch 1, dadurch gekennzeichnet, daß die Magazinplatte (62) als Flachschieber ausgebildet ist, auf dem die Gießrohre (71) nebeneinander angeordnet sind.

4. Vorrichtung nach einem der Ansprüche 1 bis 3, dadurch gekennzeichnet, daß die Stirnseiten der Gießrohre (21, 71) mit einer entfernbaren Kappe (30, 79) versehen sind.

5. Vorrichtung nach einem der Ansprüche 1 bis 4, dadurch gekennzeichnet, daß der Magazinplatte (20, 62) ein Stellantrieb (29, 78) zugeordnet ist.

## Patentansprüche (Patentansprüche für folgende(n) Vertragsstaat(en): GB)

1. Vorrichtung zum kontinuierlichen Herstellen von Schaumstoffbahnen, insbesondere Hartschaumstoffplatten, bestehend aus einem endlosen Transportband (1) und einem eingangsseitig darüber angeordneten Portal (10) mit einer quer hin- und hergehenden Auftragsvorrichtung (12, 61) für ein schaumstoffbildendes Reaktionsgemisch, wobei diese Auftragsvorrichtung (12, 61) aus einem Mischkopf (14, 66) und einem an dessen Auslaufkanal (18, 70) anschließenden, in Förderrichtung des Transportbandes (1) weisenden, an seiner Unterseite mit Auslauföffnungen (22, 72) versehenen Gießrohr (21, 71) besteht, dadurch gekennzeichnet, daß mehrere Gießrohre (21,71) auf einer an der Auftragsvorrichtung (12, 61) abnehmbar angeordneten Magazinplatte (20, 62) vorgesehen sind, wobei der Auslaufkanal (18, 70) gegen diese Magazinplatte (20, 62) weist und die Magazinplatte (20, 62) für jedes Gießrohr (21, 71) mit einem Durchlaß (23, 73) versehen und derart verstellbar ist, daß die Gießrohre (21, 71) nacheinander über die ihnen zugeordneten Durchlässe (23, 73) mit dem Auslaufkanal (70) verbindbar sind.

2. Vorrichtung nach Anspruch 1, dadurch gekennzeichnet, daß den Durchlässen (23, 73) Druckentlastungskanäle (24, 74) zugeordnet sind, welche vom benachbarten Durchlaß (23, 73) bzw. von dessen Druckentlastungskanal (24, 74) nur durch einen schmalen Abdichtungssteg (25, 75) getrennt sind.

3. Vorrichtung nach Anspruch 1 oder 2, dadurch gekennzeichnet, daß die Magazinplatte (20) als drehbare Scheibe ausgebildet ist, auf der die Gießrohre (21) in Form eines Kranzes angeordnet sind.

4. Vorrichtung nach Anspruch 1 oder 2, dadurch gekennzeichnet, daß die Magazinplatte (62) als Flachschieber ausgebildet ist, auf dem die Gießrohre (71) nebeneinander angeordnet sind.

5. Vorrichtung nach einem der Ansprüche 1 bis 4, dadurch gekennzeichnet, daß die Stirnseiten der Gießrohre (21, 71) mit einer entfernbaren Kappe (30, 79) versehen sind.

6. Vorrichtung nach einem der Ansprüche 1 bis 5, dadurch gekennzeichnet, daß der Magazinplatte (20, 62) ein Stellantrieb (29, 78) zugeordnet ist.

## Claims (Claims for the following Contracting State(s): DE, FR, IT)

1. Apparatus for the continuous production of foam webs, in particular rigid foam sheets, consisting of a continuous conveyor belt (1) and a portal (10) arranged above it on the input side having a transversely reciprocating application apparatus (12, 61) for a foam-forming reaction mixture, wherein this application apparatus (12, 61) consists of a mixing head (14, 66) and a casting tube (21, 71) pointing in the conveying direction of the conveyor belt (1) and connected to the discharge channel (18, 70) of the mixing head, the underside of which casting tube is provided with discharge orifices (22, 72), wherein two or more casting tubes (21, 71) are provided on a magazine plate (20, 62) which is removably arranged on the application apparatus (12, 61); the discharge channel (18, 70) points towards this magazine plate (20, 62) and the magazine plate (20, 62) for each casting tube (21, 71) is provided with a passage (23, 73) and is adjustable in such a manner that the casting tubes (21, 71) are successively connectable via the passages associated therewith (23, 73) with the discharge channel (70), wherein pressure relief channels (24, 74) are associated with the passages (23, 73), which channels are separated from the adjacent passage (23, 73) or from the pressure relief channel thereof (24, 74) only by a narrow sealing web (25, 75).

2. Apparatus according to claim 1, characterised in that the magazine plate (20) takes the form of a rotatable disk, on which the casting tubes (21) are arranged in the shape of a crown.

3. Apparatus according to claim 1, characterised in that the magazine plate (62) takes the form of a flat slider, on which the casting tubes (71) are arranged next to each other.

4. Apparatus according to one of claims 1 to 3, characterised in that the end faces of the casting tubes (21, 71) are provided with a removable cap (30, 79).

5. Apparatus according to one of claims 1 to 4, characterised in that an actuating drive (29, 78) is associated with the magazine plate (20, 62).

## Claims (Claims for the following Contracting State(s): GB)

1. Apparatus for the continuous production of foam webs, in particular rigid foam sheets, consisting of a continuous conveyor belt (1) and a portal (10) arranged above it on the input side having a transversely reciprocating application apparatus (12, 61) for a foam-forming reaction mixture, wherein this application apparatus (12, 61) consists of a mixing head (14, 66) and a casting tube (21, 71) pointing in the conveying direction of the conveyor belt (1) and connected to the discharge channel (18, 70) of the mixing head, the underside of which casting tube is provided with discharge orifices (22, 72), characterised in that two or more casting tubes (21, 71) are provided on a magazine plate (20, 62) which is removably arranged on the application apparatus (12, 61), wherein the discharge channel (18, 70) points towards this magazine plate (20, 62) and the magazine plate (20, 62) for each casting tube (21, 71) is provided with a passage (23, 73) and is adjustable in such a manner that the casting tubes (21, 71) are successively connectable via the passages associated therewith (23, 73) with the discharge channel (70).

2. Apparatus according to claim 1, characterised in that pressure relief channels (24, 74) are associated with the passages (23, 73), which channels are separated from the adjacent passage (23, 73) or from the pressure relief channel thereof (24, 74) only by a narrow sealing web (25, 75).

3. Apparatus according to claim 1 or 2, characterised in that the magazine plate (20) takes the form of a rotatable disk, on which the casting tubes (21) are arranged in the shape of a crown.

4. Apparatus according to claim 1 or 2, characterised in that the magazine plate (62) takes the form of a flat slider, on which the casting tubes (71) are arranged next to each other.

5. Apparatus according to one of claims 1 to 4, characterised in that the end faces of the casting tubes (21, 71) are provided with a removable cap (30, 79).

6. Apparatus according to one of claims 1 to 5, characterised in that an actuating drive (29, 78) is associated with the magazine plate (20, 62).

## Revendications (Revendications pour l'(les) Etat(s) contractant(s) suivant(s): DE, FR, IT)

1. Appareil pour fabriquer en continu des bandes de matériau en mousse, en particulier des plaques de mousse dure, comprenant une courroie de transport sans fin (1) et un portique (10) agencé au-dessus de celle-ci du côté d'entrée, avec un dispositif de déposition (12, 61) en va-et-vient transversalement, pour un mélange de réaction qui forme de la mousse, ledit dispositif de déposition (12, 61) étant constitué par une tête de mélange (14, 66) et par un tube de versement (21, 71) qui se raccorde au canal de sortie (18, 70) de la tête de mélange, qui est dirigé dans la direction de convoyage de la courroie de transport (1) et qui est pourvu à sa face inférieure d'ouvertures de sortie (22, 72), dans lequel plusieurs tubes de versement (21, 71) sont prévus sur une plaque de magasin (20, 62) agencée de manière amovible sur le dispositif de déposition (12, 61); le canal de sortie (18, 70) est orienté contre cette plaque de magasin (20, 62) et la plaque de magasin (20, 62) est pourvue d'un passage (23, 73) pour chaque tube de versement (21, 71) et peut être déplacée de telle manière que les tubes de versement (21, 71) peuvent être reliés les uns après les autres au canal de sortie (70) par l'intermédiaire des passages qui leur sont associés (23, 73); et des canaux de décharge de pression (24, 74) sont associés au passages (23, 73), lesdits canaux étant séparés des passages voisins (23, 73) ou de leurs canaux de décharge de pression (24, 74) uniquement par une étroite barrette d'étanchéité (25, 75).

2. Appareil selon la revendication 1, caractérisé en ce que la plaque de magasin (20) est réalisée sous forme d'un disque rotatif, sur lequel les tubes de versement (21) sont agencés sous la forme d'une couronne.

3. Appareil selon la revendication 1, caractérisé en ce que la plaque de magasin (62) est réalisée sous forme d'un tiroir plat, sur lequel les tubes de versement (71) sont agencés les uns à côté des autres.

4. Appareil selon l'une des revendications 1 à 3, caractérisé en ce que les côtés frontaux des tubes de versement (21, 71) sont pourvus d'un capuchon amovible (30, 79).

5. Appareil selon l'une des revendications 1 à 4, caractérisé en ce qu'un entraînement de positionnement (29, 78) est associé à la plaque de magasin (20, 62).

## Revendications (Revendications pour l'(les) Etat(s) contractant(s) suivant(s): GB)

1. Appareil pour fabriquer en continu des bandes de matériau en mousse, en particulier des plaques de mousse dure, comprenant une courroie de transport sans fin (1) et un portique (10) agencé au-dessus de celle-ci du côté d'entrée, avec un dispositif de déposition (12, 61) en va-et-vient transversalement, pour un mélange de réaction qui forme de la mousse, ledit dispositif de déposition (12, 61) étant constitué par une tête de mélange (14, 66) et par un tube de versement (21, 71) qui se raccorde au canal de sortie (18, 70) de la tête de mélange, qui est dirigé dans la direction de convoyage de la courroie de transport (1) et qui est pourvu à sa face inférieure d'ouvertures de sortie (22, 72), caractérisé en ce que plusieurs tubes de versement (21, 71) sont prévus sur une plaque de magasin (20, 62) agencée de manière amovible sur le dispositif de déposition (12, 61); dans lequel le canal de sortie (18, 70) est orienté contre cette plaque de magasin (20, 62) et la plaque de magasin (20, 62) est pourvue d'un passage (23, 73) pour chaque tube de versement (21, 71) et peut être déplacée de telle manière que les tubes de versement (21, 71) peuvent être reliés les uns après les autres au canal de sortie (70) par l'intermédiaire des passages qui leur sont associés (23, 73).

2. Appareil selon la revendication 1, caractérisé en ce que des canaux de décharge de pression (24, 74) sont associés au passages (23, 73), lesdits canaux étant séparés des passages voisins (23, 73) ou de leurs canaux de décharge de pression (24, 74) uniquement par une étroite barrette d'étanchéité (25, 75).

3. Appareil selon l'une ou l'autre des revendications 1 et 2, caractérisé en ce que la plaque de magasin (20) est réalisée sous forme d'un disque rotatif, sur lequel les tubes de versement (21) sont agencés sous la forme d'une couronne.

4. Appareil selon l'une ou l'autre des revendications 1 et 2, caractérisé en ce que la plaque de magasin (62) est réalisée sous forme d'un tiroir plat, sur lequel les tubes de versement (71) sont agencés les uns à côté des autres.

5. Appareil selon l'une des revendications 1 à 4, caractérisé en ce que les côtés frontaux des tubes de versement (21, 71) sont pourvus d'un capuchon amovible (30, 79).

6. Appareil selon l'une des revendications 1 à 5, caractérisé en ce qu'un entraînement de positionnement (29, 78) est associé à la plaque de magasin (20, 62).
